Europäisches Patentamt

European Patent Office

Office européen des brevets

(11) Publication number: **0 161 076**

**B1**

(12)

# EUROPEAN PATENT SPECIFICATION

(45) Date of publication of patent specification: **27.07.88**

(51) Int. Cl.⁴: **A 21 C 3/02**

(21) Application number: **85302501.3**

(22) Date of filing: **09.04.85**

(54) **Apparatus and method for continuously producing a strip of dough having substantially constant transverse dimensions and flow rate.**

(30) Priority: **09.04.84 JP 69103/84**
**08.06.84 JP 116708/84**

(43) Date of publication of application:
**13.11.85 Bulletin 85/46**

(45) Publication of the grant of the patent:
**27.07.88 Bulletin 88/30**

(84) Designated Contracting States:
**AT BE CH DE FR GB IT LI NL SE**

(56) References cited:
**FR-A-1 019 709**
**FR-A-2 353 838**
**GB-A- 507 402**
**GB-A- 868 183**
**GB-A-1 115 859**
**GB-A-2 078 403**
**US-A-3 593 676**
**US-A-4 192 636**
**US-A-4 233 255**

(73) Proprietor: **RHEON AUTOMATIC MACHINERY CO. LTD.**
**2-3, Nozawa-machi**
**Utsunomiya-shi Tochigi-ken (JP)**

(72) Inventor: **Hayashi, Torahiko**
**3-4, Nozawa-machi**
**Utsunomiya-shi Tochigi-ken (JP)**

(74) Representative: **Leale, Robin George et al**
**FRANK B. DEHN & CO. Imperial House 15-19**
**Kingsway**
**London WC2B 6UZ (GB)**

Courier Press, Leamington Spa, England.

## Description

This invention relates to an apparatus and method for continuously producing at a substantially constant flow rate a strip of dough of substantially constant transverse dimensions.

Continuous feeding of elastic and viscous plastic dough, such as for example bread dough, has hitherto been carried out by extrusion using a screw apparatus or by suction and extrusion using an extruder with a piston and cylinder.

These apparatuses or processes basically rely upon mechanical forces to form continuous dough strips, as a result of which an excessive pressure is frequently imparted to the dough being fed, and the dough is frequently severed with the screw during stirring. Such mechanical forces are harmful to the structure of dough, especially in the case of bread dough, as the gel structure of the dough tends to be destroyed due to the pressure or stirring, and an extra step is therefore required later for the recovery of the gel structure. Such a step requires a further device and thus the overall size of the dough processing apparatus becomes bulky.

EP-A-0161070 which is comprised in the state of the art according to Article 54(3) of the European Patent Convention discloses an apparatus and method for producing a regulated flow of plastic materials such as dough. In this apparatus, a variable speed feeding conveyor, a constant speed conveyor, and pressing means arranged above the respective conveyors, are provided. The speed of the variable speed feeding conveyor is changed by a control unit depending on the weight of the dough portion measured by a weighing device provided at the feeding conveyor. Due to the speed ratio of the conveyors, the dough is stretched or compressed, thereby regulating the flow of the dough. In this apparatus, the weight of the dough per unit length can be quantified by compressing or stretching the dough in the limited portion positioned between the two pressing means, but the thickness and width per unit length cannot be quantified. Therefore, if there is a thin area in any portion of the dough, too much stress is concentrated on the thin area when the dough portion is stretched, resulting in tearing the dough strip. Moreover, such a dough strip having uneven dimensions is not suitable for automated production.

US-A-4192636 discloses an apparatus for stretching dough material comprising three conveyors. For stretching, each of the conveyors moves faster than the nearest upstream conveyor. In this apparatus, all conveyors are constant speed conveyors and the speed ratio of the conveyors is fixed. Therefore the apparatus cannot stretch or compress the dough depending on the weight of dough portions and cannot regulate the flow rate of the dough.

Viewed from one aspect the present invention provides apparatus for continuously producing at a substantially constant flow rate a strip of dough of substantially constant transverse dimensions, comprising: feed conveyor means for continuously feeding the dough, a dough weighing device associated with said feed conveyor means to continuously measure the weight of portions of the dough conveyed past the weighing device, dough pressing means disposed above and adjacent the downstream end of said feed conveyor means, arranged to rotate about its own axis at substantially the same linear speed as the conveyor speed of at least the downstream end portion of the said feed conveyor means, a first constant-speed conveyor arranged in series with and adjacent said feed conveyor means, downstream thereof, a second constant-speed conveyor arranged in series with and adjacent said first constant-speed conveyor, downstream thereof, said second constant-speed conveyor being arranged to be driven at a speed higher than that of said first constant-speed conveyor, a roller mechanism positioned above said first and second constant-speed conveyors, comprising a plurality of rollers rotatable about their own axes and movable in unison around an endless roller path in the same direction as the direction of movement of the dough strip, the peripheries of the moving rollers forming a closed envelope having a lower straight portion spaced a predetermined height above the conveying portions of both of said constant-speed conveyors, two width defining members positioned, one on each side of the path of the dough strip, between said straight portion of said endless roller path and said conveying portion of said first constant-speed conveyor, to define the width of the dough, and a control unit for controlling the speed of at least the downstream end portion of said feed conveyor means, at a speed inversely proportional to the weight of a dough portion as measured by said weighing device, so as to change the speed ratio of said feed conveyor and said first constant-speed conveyor for stretching and compressing the dough.

Viewed from another aspect the present invention provides a method of continuously producing at a substantially constant flow rate a strip of dough of substantially constant transverse dimensions, comprising registering a reference conveying weight of dough per unit time, continuously measuring the weight of portions of the dough conveyed per unit time, comparing the resulting measurements with said reference conveying weight of dough and changing the speed of a feed conveyor at a speed inversely proportional to the dough weight measured, feeding the dough from said feed conveyor to a constant-speed conveyor to stretch or compress the dough while pressing it to said conveyors with pressing means arranged above said feed conveyor and a roller mechanism arranged above said constant-speed conveyor, thereby making uniform the weight of successive dough portions of an equal length, and constricting the width of the dough to a predetermined width while regulating its thickness to provide a dough strip of substantially constant dimensions fed at a substantially constant flow rate.

Some embodiments of the invention will now be described by way of example and with reference to the accompanying drawings, in which:

Fig. 1 is a side elevation view showing a first embodiment of apparatus according to the present invention;

Fig. 2 is a block diagram of a control unit for use in apparatus according to the present invention;

Fig. 3 is a plan view of the apparatus of Fig. 1 using a rotary member having linear projections;

Fig. 4 is a plan view of a modified apparatus using a rotary member having helical projections;

Fig. 5 illustrates the state of the dough when transferred onto a constant-speed conveyor;

Fig. 6 is a side elevation view of a second embodiment of apparatus according to the present invention; and

Fig. 7 is a side elevation view of part of a third embodiment of apparatus according to the present invention.

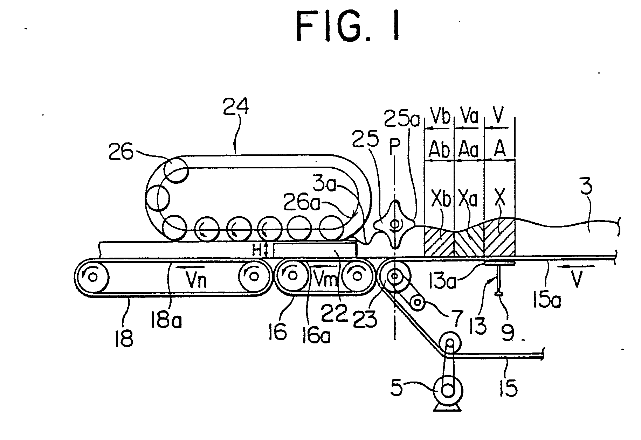

Referring to Fig. 1, an apparatus according to the present invention comprises a feed conveyor 15, a first constant-speed conveyor 16, and a second constant-speed conveyor 18, which three conveyors provide a conveying plane by way of their belts 15a, 16a and 18a. A weighing device 13 is disposed at a predetermined position underneath the lower surface of the belt 15a of the feed conveyor 15, and the portion of the weighing device 13 making contact with the belt 15a constitutes a weighing table 13a having a length A. A load sensor 9 is arranged to measure the weight X of a portion of dough passing over the weighing table 13a, and the measured values are applied to a microcomputer 41 in a control unit to be described later.

A driven roller 23 which drives the conveyor 15 is driven by a motor 5, and a rotation transducer 7 which rotates in synchronism with the driven roller 23 is arranged to generate pulses indicative of the length of movement of the belt 15a.

The conveyor 16, arranged adjacent to the downstream end of the feed conveyor 15, is arranged to be driven at a constant speed and receives the dough fed from the feed conveyor 15. A pressing means in the form of a roller 25 is provided at a predetermined fixed position above and adjacent to the downstream end of the feed conveyor 15. The roller 15 has four projections 25a and it rotates about its own axis at substantially the same linear speed as the speed of the belt 5a so as to form compressed portions 3a on the upper surface of the dough 3. As explained later, roller 25 can alternatively be without any projections.

The second constant-speed conveyor 18 is arranged in series with, and adjacent to the downstream end of, the first constant-speed conveyor 16. The conveyor 18 conveys the dough from the conveyor 16 at a constant speed higher than that of the conveyor 16, and supplies the dough to a subsequent station.

A roller mechanism 24 is positioned above the first and second constant-speed conveyors, and comprises a plurality of rollers 26 adapted to move in unison along an endless roller path. The peripheries of the moving rollers 26 form a closed envelope having a lower straight portion spaced by a predetermined height H above the conveying portions of both the first and second constant-speed conveyors 16 and 18. The height H can be smaller in the region of the second constant-speed conveyor than in that of the first constant-speed conveyor, because the higher speed of the second conveyor can compensate for the decrease in height. Each roller can rotate about its axis and the rollers move in the direction indicated by arrow 26a in Fig. 1. The speed of movement of the rollers along the endless roller path is substantially higher than that of the second constant-speed conveyor 18 so that, as the rollers are freely rotatable, when they come into contact with the dough on the conveyors, the rollers rotate about their axes in the direction of the arrows as indicated in Fig. 1. The direction of rotation may be mechanically fixed by any suitable means.

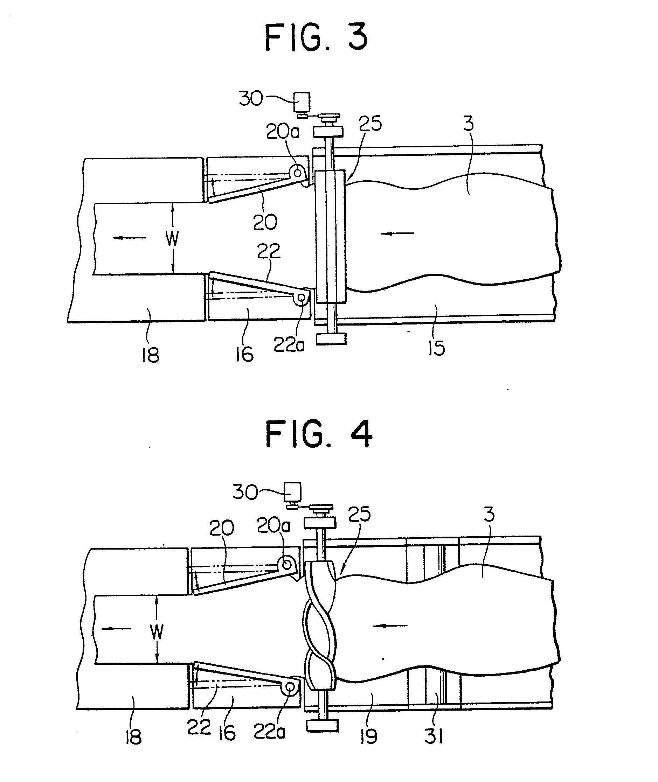

Two width defining members 20 and 22, mounted on the frame of the apparatus as shown in Fig. 3, are positioned between the lower straight portion of the roller mechanism 24 and the first constant-speed conveyor 16, as shown in Fig. 1. Each of such members can be a plate, and they are pivotally mounted at 20a and 22a respectively.

The members 20 and 22 are movable toward and away from each other, about their pivots 20a, 22a, for setting a predetermined distance between the free downstream ends of the members so as to define the width of a strip of dough passing therethrough. It is alternatively possible to fix the defining members at predetermined positions to define the width of the dough strip.

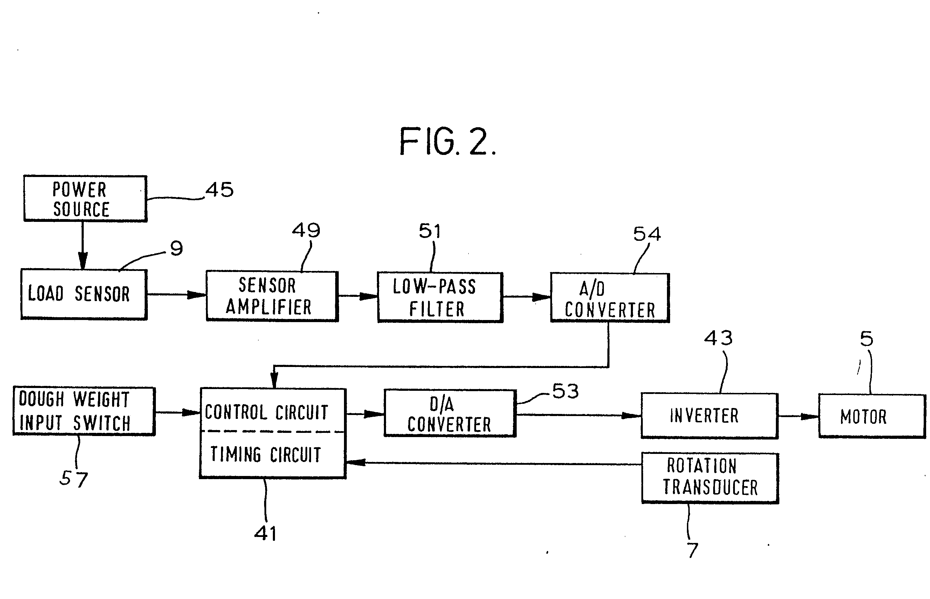

As shown in Fig. 2, a control unit employed in the present apparatus includes a microcomputer 41 as its principal component, and the measured values from the load sensor 9 and the pulses from the rotation transducer 7 are applied to the microcomputer 41. A power source 45 applies a voltage to the load sensor 9, where the weight of the dough 3 is sensed and converted into voltages in proportion to the weight measured. A sensor amplifier 49 amplifies the sensor voltage. A low-pass filter 51 permits only the passage of frequencies lower than 10 Hz from the sensor voltage. Since the sensor voltage includes noise due to vibration of the conveyor, etc., the low-pass filter 51 is used to remove such noise, so that frequencies higher than 10 Hz are cut off, to improve the S/N ratio. The noise-free sensor voltage is transmitted to a control circuit of the microcomputer 41 through an A/D converter 54, which serves to convert an alternating current from the low-pass filter 51 into a direct current. It is often the case that the load sensor 9 produces sizable voltages due to extraneous objects on the conveyor even when it caries no dough, and in such an instance the voltage indication must be adjusted to zero.

To achieve this, the output from the low-pass filter 51 is transmitted to a control circuit of the microcomputer 41, where a signal is produced to set the output voltage from the sensor amplifier 49 at zero. AD/A converter 53 serves to convert a direct current from the microcomputer 41 into an alternating current. A dough weight input switch 57 acts as means for setting a production rate per unit time. A timing circuit of the microcomputer 41 receives from the rotation transducer 7 pulses corresponding to the length of movement of the belt 15a. The microcomputer 41 computes in response to the input values so as to control the drive motor 5 and, consequently, the driven roll 23 of the conveyor 15 through an inverter 43.

If the weight of the unit length A of the dough 3 is heavy, the motor 5 is caused to be driven at a lower speed Va, while if the weight of the unit length A of the dough is light, the motor 5 is caused to be driven at a higher speed Vb.

The roller 25 above and adjacent to the downstream end of the feed conveyor 15 forms compressed portions 3a in the dough 3 so that the dough can always move at the same speed as that of the feed conveyor 15. The rollers 26 in the roller mechanism 24 also hold the dough. Particularly, the roller 26 which first comes into contact with the dough on the first constant-speed conveyor defines a space between it and the roller 25 for stretching or compressing the dough therebetween depending on the measurement made at the weighing device 13. The dough is conveyed at a constant speed by the first constant-speed conveyor 16. The dough from the feed conveyor 15, by the cooperative action of the roller 25 and the belt 15a, is fed at various speeds controlled by the control unit, thereby stretching or compressing the dough between the rollers 26 and the roller 25.

The operation of the individual constituent members of the apparatus will now be described.

A production rate of dough per unit time is applied to the microcomputer 41 by dough weight input switch 47 to register a reference conveying weight of dough. The dough 3, previously shaped into a web form, is placed on the feed conveyor 15 by the operator, and the weighing device 13 measures the weight of each unit length A of the dough 3 being conveyed on the feed conveyor 15. That is, each time the rotation transducer 7 detects that the dough has been conveyed by a distance equal to the length A, the microcomputer 41 applies a measurement command to the weighing device 13, and, in response to the above command, the load sensor 9 applies the measured value X as an input to the microcomputer 41.

Each time the arrival of a dough portion A, having a measured weight Xn, at the delivery end P of the feed conveyor 15, is detected by the microcomputer 41 as the result of the input applied from the rotation transducer 7, the microcomputer 41 calculates and automatically sets the velocity Vn of the conveyor 15 to correspond to the measured weight Xn of the dough portion An. When the weight Xa of the unit length A of the dough 3 is heavier than the reference value, the dough 3 is conveyed at a lower speed Va, whilst when the weight Xb of the unit length A of the dough 3 is lighter than the reference value, the dough 3 is conveyed at a higher speed Vb. The relation between the speed of the conveyor 15 and the weight of the dough portion is expressed as follows:

$$Xa.Va=Xb.Vb=Constant$$

The measurements are compared with the reference conveying weight of dough by the microcomputer 41 and the difference between the reference conveying weight and the measurements are transmitted to inverter 43 through D/A converter 53, as signals. The signals are changed into values inversely proportional to the measurements, to drive a motor 5. Thus, the speed V of the dough portion delivered from the conveyor 15 is inversely proportional to the weight X of the dough portion.

When the dough being conveyed on the feed conveyor 15 is divided into dough portions Aa, Ab,......, each having a unit length A, such portions necessarily have different weights X. Therefore, for each of the individual weighed portions of the dough conveyed by the feed conveyor 15 and arriving at the conveyor's delivery end P, the conveyor 15 is driven at a speed V which constantly changes. The speed decreases when the measured weight is heavier than the standard value, and increases when the measured weight is lighter than the standard value.

Therefore, during the transfer of the dough onto the first constant-speed conveyor 16, a dough portion having a heavy unit weight is stretched, while a dough portion having a light weight is compressed. Thus, a dough web 3 having a constant weight per unit length is conveyed onto the first constant-speed conveyor 16.

In the above described embodiment of the present invention, the unit length A of the weighing table 13a of the weighing device 13 can be freely selected.

Therefore, when the length A is selected to be a short distance, the weight of the dough can be measured more accurately. The change in the measurement of weight of the dough can thus be more precisely differentiated, and the differentiated values of weight change are converted into inversely proportional speeds at the delivery end of the dough feed conveyor 15. In this manner, the speed of the conveyor 15 during transfer of the dough between the conveyors is minutely controlled so that quantification of the dough can be accurately achieved.

In the present apparatus, the roller 25 is illustrated as having projections 25a. However, the roller is not necessarily required to have projections. The interval between the projections may be progressively narrowed to facilitate accurate weighing. If the interval is narrowed to the extreme, the roller will become a cylindrical one.

The use of such a cylindrical roller is within the scope of this invention. Again, any other suitable pressing device may also be employed. For example, a rotary member 25 having helical projections may be used, as shown in Fig. 4.

The dough, stretched or compressed as above described, is fed onto the first constant-speed conveyor 16, and the width of the dough is controlled by the defining members 20 and 22 to a predetermined width.

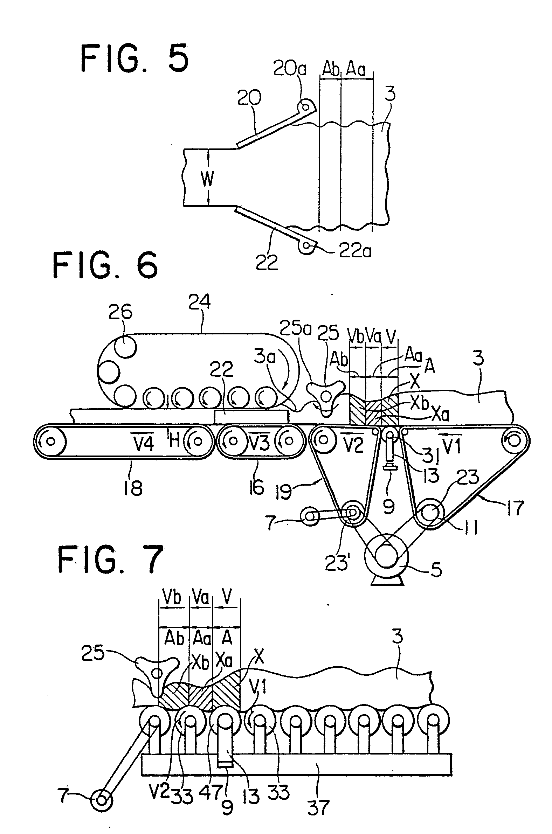

Portions of the dough 3 of a length A proceeding to the first constant-speed conveyor 16 are subjected to tension that is inversely proportional to their weight X. Therefore, the dough portions Aa and Ab will have lengths different from each other, as shown in Fig. 5, but each portion comprises substantially the same amount of dough, thereby making the flow rate of dough even, with any variation in the flow rate being limited to an insignificant range. That is, the fluctuation in the weight of dough portions becomes restricted to within each portion of dough.

The dough fed onto the first constant-speed conveyor 16 is shaped by the defining members 20 and 22 as described above, while being concurrently shaped between the rollers 26 and the conveyor 16. Since the second constant-speed conveyor 18 runs at a higher speed than the conveyor 16, the dough flows smoothly regardless of the restriction on the width of the dough strip. When the dough is fed to the second constant-speed conveyor, the thickness of the dough fed becomes constant, whereby a dough strip having constant dimensions is produced at a uniform flow rate. The dough is then fed from the second constant-speed conveyor 18 to a subsequent processing station.

A second embodiment of the invention will now be described with reference to Fig. 6. As shown, the apparatus of this embodiment has two feed conveyors 17 and 19, with a weighing device 13 disposed between two conveyors.

A first constant-speed conveyor 16 is arranged in series with the second feed conveyor 19, and pressing means 25 is disposed in the same relative position as in the first embodiment. The first and second feed conveyors 17 and 19 are both driven by a motor 5, through driven rollers 23 and 23' respectively. A rotation transducer 7 is connected by a transmission belt with the driving part of the second feed conveyor 19. The first feed conveyor 17, a roller 31 of the weighing device 13, the second feed conveyor 19, and the first constant-speed conveyor 16, together form a conveying plane. Normally, the first and second feed conveyors 17 and 19 are driven at the same speed by the motor 5, but the movement of the first feed conveyor 17 can be stopped when necessary. A clutch 11 is mounted on the rotary shaft of the driven roller 23 so that transmission of the rotary movement of the motor 5 can be interrupted. A maximum weight value of the dough portions to be weighed by the weighing device 13 is previously set. If the weight of the dough portions conveyed from the first feed conveyor 17 exceeds the set value, the clutch 11 is actuated (disengaged) so as to interrupt transmission of the drive from the motor 5 to the first feed conveyor 17, so that the conveying movement of the first feed conveyor 17 is stopped until the weight of the dough falls below the set value.

While the first feed conveyor 17 is stationary, the dough 3 on the weighing device 13 is stretched between the first feed conveyor 17 and the second feed conveyor 19, resulting in a reduced weight. Therefore, the weight of the dough transferred onto the second feed conveyor 19 is caused to fall always within a certain predetermined range, so that the quantifiable range of the dough weight can be further improved.

A third embodiment of the invention will next be described with reference to Fig. 7. As shown, a plurality of revolving rollers 33 are juxtaposed to constitute a roller conveyor assembly 37, which is used for the conveying of dough 3. One of the rollers 33 is replaced by a load-receiving roller 47, functioning as a weighing device 13, and a load sensor 9 is associated with the load-receiving roller 47 to measure the weight of the dough passing over it. The rollers 33 rotate in synchronism with one another, while the roller 47 either rotates freely or is driven by a motor built into it.

The manner of control in this embodiment is such that, when the weight of a unit length A of the weighed dough 3 is relatively heavy, the motor 5 decreases the rotational speed of the rollers 33, while, when the weight of a unit length A of the weighed dough 3 is relatively light, the motor 5 increases the rotational speed of the said rollers. Also, when the load sensor 9 senses a weight heavier than a predetermined value, the rotation of the rollers 33 upstream of the weighing device 13 is stopped until the weight becomes lighter than the predetermined value.

In the second and third embodiments, the roller 31 or 47 may be driven by a motor built into the roller so that no load except for the weight of the dough acts upon the sensor, thereby further improving accuracy. If the motor were externally positioned and the force to cause the rotation of the roller 31 or 47 were transmitted therefrom, the moment of rotation of the roller shaft, driven by the external source, would act upon the load sensor 9 as a load other than the weight of the dough, making accurate measurement impossible. Again, even if a freely rotatable idle roller is used, the surface friction on the roller, changing from time to time due to the movement of the dough, in turn causes the movement of the dough to change, thereby providing the load sensor with inaccurate information affected by extraneous noises and impairing precise measurement.

Thus apparatus according to the present invention, at least as described above, enables the width and thickness of a doughstrip to be easily maintained constant while the dough is being conveyed, even when the dough is fed in a nonuniform state.

When the principles of the present invention are applied to a bread-making process, the bread-making apparatus can be reduced in size because the gel structure of the dough is not destroyed in the process, and thus no steps to restore the gel structure are required.

Although the aforementioned embodiments have referred to the handling of bread dough by way of example, the present invention is in no way limited to such embodiments, and it is apparent from the constitution thereof that the invention is also applicable to apparatus for conveying other elastic and viscous materials, such as foodstuffs including noodles and fish pastes, and other high-molecular materials.

## Claims

1. Apparatus for continuously producing at a substantially constant flow rate a strip of dough of substantially constant transverse dimensions, comprising: feed conveyor means (15, 17, 19, 37) for continuously feeding the dough (3), a dough weighing device (13) associated with said feed conveyor means (15, 17, 19, 37) to continuously measure the weight of portions of the dough (3) conveyed past the weighing device (13), dough pressing means (25) disposed above and adjacent the downstream end of said feed conveyor means (15, 17, 19, 37), arranged to rotate about its own axis at substantially the same linear speed as the conveyor speed of at least the downstream end portion of the said feed conveyor means (15, 17, 19, 37), a first constant-speed conveyor (16) arranged in series with and adjacent said feed conveyor means (15, 17, 19, 37), downstream thereof, a second constant-speed conveyor (18) arranged in series with and adjacent said first constant-speed conveyor (16), downstream thereof, said second constant-speed conveyor (18) being arranged to be driven at a speed higher than that of said first constant-speed conveyor (16), a roller mechanism (24) positioned above said first and second constant-speed conveyors (16, 18), comprising a plurality of rollers (26) rotatable about their own axes and movable in unison around an endless roller path in the same direction as the direction of movement of the dough strip, the peripheries of the moving rollers forming a closed envelope having a lower straight portion spaced a predetermined height (H) above the conveying portions (16a, 18a) of both of said constant-speed conveyors (16,18), two width defining members (20, 22) positioned, one on each side of the path of the dough strip, between said straight portion of said endless roller path and said conveying portion (16a) of said first constant-speed conveyor (16), to define the width (W) of the dough, and a control unit for controlling the speed of at least the downstream end portion of said feed conveyor means (15, 17, 19, 37), at a speed inversely proportional to the weight of a dough portion as measured by sound weighing device (13), so as to change the speed ratio of said feed conveyor means (15, 17, 19, 37) and said first constant conveyor (16) for stretching or compressing the dough.

2. Apparatus according to claim 1, wherein the said feed conveyor means comprises a first feed conveyor (17) and a second feed conveyor (19) arranged in series, the said weighing device (18) being located between said two conveyors.

3. Apparatus according to claim 1, wherein the said feed conveyor means comprises at least one belt conveyor (15, 17, 19).

4. Apparatus according to claim 1, wherein the said feed conveyor means is a roller conveyor (37) having a plurality of rollers (33), one of the rollers (33) of said roller conveyor (37) being replaced by a weighing device having a roller (47) for contacting the dough (3) being conveyed, to receive the load of the dough.

5. Apparatus according to any preceding claim, wherein said pressing means is a rotary member (25) having linear projections (25a) on its outside surface.

6. Apparatus according to any of claims 1 to 4, wherein said pressing means is a rotary member (25) having helical projections on its outside surface.

7. Apparatus according to any preceding claim, wherein said two width defining members (20, 22) are mounted at their upstream ends on the frame of the apparatus and are arranged to be movable towards and away from each other so that the free ends of said members (20, 22) define the width (W) of the dough.

8. A method of continuously producing at a substantially constant flow rate a strip of dough of substantially constant transverse dimensions, comprising registering a reference conveying weight of dough per unit time, continuously measuring the weight of portions of the dough conveyed per unit time, comparing the resulting measurements with said reference conveying weight of dough and changing the speed of a feed conveyor at a speed inversely proportional to the dough weight measured, feeding the dough from said feed conveyor to a constant-speed conveyor (16) to stretch or compress the dough (3) while pressing it to said conveyors with pressing means (25) arranged above said feed conveyor (15, 17, 19, 37) and a roller mechanism (24) arranged above said constant-speed conveyor (16), thereby making uniform the weight of successive dough portions of an equal length, and constricting the width of the dough to a predetermined width while regulating its thickness to provide a dough strip of substantially constant dimensions fed at a substantially constant flow rate.

## Patentansprüche

1. Vorrichtung zur kontinuierlichen Herstellung eines Teigstreifens mit im wesentlichen konstanten Querabmessungen mit im wesentlichen konstanter Fließgeschwindigkeit, umfassend: Zufuhrfördermittel (15, 17, 19, 37) zum kontinuierlichen Zuführen des Teigs (3), eine den Zufuhrfördermitteln (15, 17, 19, 37) zugeordnete Teigwägeeinrichtung (13) zum kontinuierlichen Messen des Gewichts von Teilen des Teigs (3), die über die Wägeeinrichtung (13) hinaus befördert werden, ein über und angrenzend an das flußabwärts gelegene Ende der Zufuhrfördermittel (15, 17, 19, 37) befindliches Teigpreßmittel (25), das so angeordnet ist, daß es sich um seine eigene Achse mit im wesentlichen derselben linearen Geschwindigkeit wie die Fördergeschwindigkeit zumindest des flußabwärts gelegenen Endteils der Zufuhrfördermittel (15, 17, 19, 37) dreht, einen ersten Konstantgeschwindigkeitsförderer (16), der seriell mit und angrenzend an die Zufuhrfördermittel (15, 17, 19, 37) und flußabwärts davon angeordnet ist, einen zweiten Konstantgeschwindigkeitsförderer (18), der seriell mit und angrenzend an den ersten Konstantgeschwindigkeitsförderer (16) und flußabwärts davon angeordnet ist, wobei der zweite Konstantgeschwindigkeitsförderer (18) so angeordnet ist, daß er mit einer Geschwindigkeit angetrieben wird, die größer als die Geschwindigkeit des ersten Konstantgeschwindigkeitsförderers (16) ist, einen Rollenmechanismus (24), der über dem ersten und dem zweiten Konstantgeschwindigkeitsförderer (16, 18) positioniert ist, umfassend eine Vielzahl von Rollen (26), die um ihre eigenen Achsen drehbar und im Einklang um eine endlose Rollenbahn in dieselbe Richtung wie die Bewegungsrichtung des Teigstreifens bewegbar sind, wobei die Umfänge der sich bewegenden Rollen eine geschlossene Hülle bilden mit einem unteren geraden Teil, der sich um eine vorbestimmte Höhe (H) im Abstand über den Förderteilen (16a, 18a) beider Konstantgeschwindigkeitsförderer (16, 18) befindet, zwei Breitenbegrenzungselemente (20, 22), die jeweils eines auf jeder Seite der Bahn des Teigstreifens zwischen dem geraden Teil der endlosen Rollenbahn und dem Förderteil (16a) des ersten Konstantgeschwindigkeitsförderers (16) positioniert sind, um die Breite (W) des Teigs zu begrenzen, und eine Steuereinheit zum Steuern der Geschwindigkeit von zumindest dem flußabwärts gelegenen Endteil der Zufuhrfördermittel (15, 17, 19, 37) mit einer Geschwindigkeit, die dem Gewicht eines Teigteils, wie er von der Wägeeinrichtung (13) gemessen wird, umgekehrt porportional ist, um das Geschwindigkeitsverhältnis der Zufuhrfördermittel (15, 17, 19, 37) und des ersten konstanten Förderers (16) zum Dehnen oder Zusammendrükken des Teigs zu ändern.

2. Vorrichtung nach Anspruch 1, worin das Zufuhrfördermittel einen ersten Zufuhrförderer (17) und einen zweiten Zufuhrförderer (19) umfaßt, die seriell angeordnet sind, wobei die Wägeeinrichtung (13) zwischen diesen beiden Förderern angeordnet ist.

3. Vorrichtung nach Anspruch 1, worin das Zufuhrfördermittel zumindest einen Bandförderer (15, 17, 19) umfaßt.

4. Vorrichtung nach Anspruch 1, worin das Zufuhrfördermittel ein Rollenförderer (37) mit einer Vielzahl von Rollen (33) ist, von welchen eine der Rollen (33) des Rollenförderers (37) durch eine Wägeeinrichtung mit einer Rolle (47) zum Kontaktieren des geförderten Teigs (3) ersetzt ist, um die Last des Teigs aufzunehmen.

5. Vorrichtung nach irgendeinem vorhergehenden Anspruch, worin das Preßmittel ein Drehelement (25) mit linearen Fortsätzen (25a) an seiner äußeren Oberfläche ist.

6. Vorrichtung nach einem der Ansprüche 1 bis 4, worin das Preßmittel ein Drehelement (25) mit schraubenförmigen Fortsätzen an seiner äußeren Oberfläche ist.

7. Vorrichtung nach irgendeinem vorhergehenden Anspruch, worin die beiden Breitenbegrenzungselemente (20, 22) an ihren flußaufwärts gelegenen Enden am Rahmen der Vorrichtung angebracht sind und so angeordnet sind, daß sie zueinander und auseinander bewegbar sind, sodaß die freien Enden dieser Elemente (20, 22) die Breite (W) des Teigs begrenzen.

8. Verfahren zur kontinuierlichen Herstellung eines Teigstreifens mit im wesentlichen konstanten Querabmessungen mit im wesentlichen konstanter Fließgeschwindigkeit, umfassend das Registrieren eines Bezugs-Fördergewichts des Teigs pro Zeiteinheit, das kontinuierliche Messen des Gewichts von pro Zeiteinheit geförderten Teigteilen, das Vergleichen der resultierenden Messungen mit dem Bezugs-Fördergewicht des Teigs und das Ändern der Geschwindigkeit eines Zufuhrförderers auf eine Geschwindigkeit, die dem gemessenen Teiggewicht umgekehrt proportional ist, das Zuführen des Teigs vom Zufuhrförderer zu einem Konstantgeschwindigkeitsförderer (16) zum Dehnen oder Zusammendrücken des Teigs (3), während er mit dem über dem Zufuhrförderer (15, 17, 19, 37) angeordneten Preßmittel (25) und einem über dem Konstantgeschwindigkeitsförderer (16) angeordneten Rollenmechanismus (24) auf die Förderer gedrückt wird, wodurch das Gewicht von aufeinanderfolgenden Teigstücken gleicher Länge gleich gemacht wird, und das Beschränken der Teigbreite auf eine vorbestimmte Breite, während seine Dicke reguliert wird, um einen Teigstreifen von im wesentlichen konstanten Abmessungen vorzusehen, der mit einer im wesentlichen konstanten Fließgeschwindigkeit vorgeschoben wird.

**Revendications**

1. Appareil de production en continu, à un débit d'écoulement sensiblement constant, d'une bande de pâte de dimensions transversales sensiblement constantes, comprenant: des moyens transporteurs d'avance (15, 17, 19, 37) destinés à faire avancer en continu la pâte (3), un dispositif (13) de pesage de pâte associé auxdits moyens transporteurs d'avance (15, 17, 19, 37) pour mesurer en continu le poids de portions de la pâte (3) transportées au-delà du dispositif de pesage (13), un moyen (25) de pression de pâte disposé audessus et à proximité immédiate de l'extrémité d'aval desdits moyens transporteurs d'avance (15, 17, 19, 37), agencé de façon à tourner sur son propre axe sensiblement à la même vitesse linéaire que la vitesse de transport d'au moins le

**0 161 076**

tronçon extrême d'aval desdits moyens transporteurs d'avance (15, 17, 19, 37), un premier transporteur (16) à vitesse constante agencé en série avec lesdits moyens transporteurs d'avance (15, 17, 19, 37) et à proximité immédiate et en aval de ceux-ci, un second transporteur (18) à vitesse constante agencé en série avec ledit premier transporteur (16) à vitesse constante et à proximité immédiate et en aval de celui-ci, ledit second transporteur (18) à vitesse constante étant agencé pour être entraîné à une vitesse plus élevée que celle dudit premier transporteur (16) à vitesse constante, un mécanisme (24) à rouleaux placé au-dessus desdits premier et second transporteurs (16, 18) à vitesse constante, comprenant plusieurs rouleaux (26) pouvant tourner sur leurs propres axes et pouvant parcourir ensemble un circuit fermé dans le même sens que le sens du mouvement de la bande de pâte, les périphéries des rouleaux en mouvement formant une enveloppe fermée ayant un tronçon inférieur droit espacé d'une hauteur prédéterminée (H) au-dessus des tronçons (16a, 18a) des deux transporteurs (16, 18) à vitesse constante, deux éléments (20, 22) de définition de largeur disposés, un sur chaque côté du trajet de la bande de pâte, entre ledit tronçon droit dudit circuit fermé des rouleaux et ledit tronçon de transport (16a) dudit premier transporteur (16) à vitesse constante, afin de définir la largeur (W) de la pâte, et une unité de commande destinée à commander la vitesse d'au moins le tronçon extrême d'aval desdits moyens transporteurs d'avance (15, 17, 19, 37), à une vitesse inversement proportionnelle au poids d'une portion de pâte, tel que mesuré par ledit dispositif (13) de pesage, de façon à modifier le rapport de la vitesse desdits moyens transporteurs d'avance (15, 17, 19, 37) à la vitesse dudit premier transporteur (16) à vitesse constante pour étirer ou comprimer la pâte.

2. Appareil selon la revendication 1, dans lequel lesdits moyens transporteurs d'avance comprennent un premier transporteur d'avance (17) et un second transporteur d'avance (19) agencés en série, ledit dispositif de pesage (18) étant placé entre les deux transporteurs.

3. Appareil selon la revendication 1, dans lequel lesdits moyens transporteurs d'avance comprennent au moins un transporteur à bande (15,17,19).

4. Appareil selon la revendication 1, dans lequel lesdits moyens transporteurs d'avance comprennent un transporteur (37) à rouleaux comportant plusieurs rouleaux (33), l'un des rouleaux (33) dudit transporteur (37) étant remplacé par un dispositif de pesage ayant un rouleau (47) destiné à entrer en contact avec la pâte (3) pendant son transport, afin de recevoir la charge de la pâte.

5. Appareil selon l'une quelconque des revendications précédentes, dans lequel lesdits moyens de compression comprennent un élément rotatif (25) dont la surface extérieure présente des saillies linéaires (25a).

6. Appareil selon l'une quelconque des revendications 1 à 4, dans lequel lesdits moyens de compression comprennent un élément rotatif (25) dont la surface extérieure présente des saillies hélicoïdales.

7. Appareil selon l'une quelconque des revendications précédentes, dans lequel les deux éléments (20, 22) de définition de largeur sont montés, par leurs extrémités d'amont, sur le bâti de l'appareil et sont agencés de façon à pouvoir être rapprochés et éloignés l'un de l'autre afin que les extrémités libres desdits éléments (20, 22) définissent la largeur (W) de la pâte.

8. Procédé de production en continu, à un débit d'écoulement sensiblement constant, d'une bande de pâte de dimensions transversales sensiblement constantes, consistant à enregistrer un poids de pâte transportée de référence par unité de temps, à mesurer en continu le poids de portions de la pâte transportée par unité de temps, à comparer les mesures résultantes audit poids de pâte transporté de référence et à modifier la vitesse d'un transporteur d'avance à une vitesse inversement proportionnelle au poids de pâte mesurée, à faire avancer la pâte dudit transporteur d'avance vers un transporteur (16) à vitesse constante pour étirer ou comprimer la pâte (3) tout en la comprimant contre lesdits transporteurs à l'aide d'un moyen (25) de compression agencé au-dessus dudit transporteur d'avance (15, 17, 19, 37) et d'un mécanisme à rouleaux (24) agencé au-dessus dudit transporteur (16) à vitesse constante, afin de rendre uniforme le poids de portions successives de pâte de longueur égale, et à resserrer la largeur de la pâte jusqu'à une largeur prédéterminée tout en réglant son épaisseur pour produire une bande de pâte de dimensions sensiblement constantes, avancée à un débit d'écoulement sensiblement constant.

# FIG. I

# FIG. 2.

# FIG. 3

# FIG. 4

# FIG. 5

# FIG. 6

# FIG. 7